(19) Europäisches Patentamt
European Patent Office
Office européen des brevets

(11) **EP 2 424 021 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(51) Int Cl.:
*H01M 8/0662* (2016.01)    *H01M 8/04537* (2016.01)
*H01M 8/0438* (2016.01)    *H01M 8/124* (2016.01)

(21) Anmeldenummer: **11006683.4**

(22) Anmeldetag: **16.08.2011**

(54) **Brennstoffzellenanlage**

Fuel cell assembly

Système de pile à combustible

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2010 AT 14172010**

(43) Veröffentlichungstag der Anmeldung:
**29.02.2012 Patentblatt 2012/09**

(73) Patentinhaber: **Vaillant GmbH**
**42859 Remscheid (DE)**

(72) Erfinder:
• **Badenhop, Thomas**
**51688 Wipperfürth (DE)**
• **Paulus, Jochen**
**42655 Solingen (DE)**

• **Plümke, Marco**
**40225 Düsseldorf (DE)**
• **Reinert, Andreas**
**58455 Witten (DE)**

(74) Vertreter: **Hocker, Thomas**
**Vaillant GmbH**
**Berghauser Strasse 40**
**42859 Remscheid (DE)**

(56) Entgegenhaltungen:
**EP-A1- 2 164 124      EP-A2- 1 261 054**
**WO-A1-2004/000590     WO-A1-2008/031379**
**DE-A1-102006 029 743  US-A1- 2003 235 732**
**US-A1- 2006 154 121**

**Beschreibung**

Die Erfindung betrifft ein Verfahren zum Überwachen einer Brennstoffzellenanlage.

Eine gattungsgemäße Brennstoffzellenanlage ist aus der EP 2 164 124 A1 bekannt. Brennstoffzellen wandeln chemische Energie direkt in elektrische Energie um und bestehen aus einem ionenleitenden und gasdichten Elektrolyten, einer luftführenden Kathode und einer brenngasführenden Anode, die an den Elektrolyten angrenzen. Unterschiedliche Elektrolytarten definieren unterschiedliche Brennstoffzellentypen und deren Betriebstemperaturen. Eine Festoxidbrennstoffzelle (Solid Oxide Fuel Cell oder SOFC) ist eine Hochtemperatur-Brennstoffzelle, die bei einer Betriebstemperatur von 800 C - 1000°C betrieben wird. Der innere Ladungstransport einer solchen Hochtemperatur-Brennstoffzelle erfolgt mittels $O^{2-}$-Ionen, wobei die SOFC-Brennstoffzelle auf der Anodenseite Sauerstoff zur Produktion von Wasser $H_2O$ und/oder Kohlendioxid $CO_2$ an der Anode benötigt.

Da der ebenfalls für die Produktion von Wasser erforderliche Wasserstoff als Brennstoff in der Hausenergieversorgung in der Regel nicht zur Verfügung steht, muss dieser erst aus üblichen Brennstoffen z.B. Kohlenwasserstoffe wie Erdgas oder Heizöl EL hergestellt werden. Beim Betrieb von Brennstoffzellen mit solchen Kohlenwasserstoffen wird der Brennstoffzelle in der Regel ein Reformer vorgeschaltet, in dem ein wasserstoffreiches Gas (Reformat) aus dem Kohlenwasserstoff erzeugt (reformiert) wird.

Die Patentanmeldung US 2006/0154121 A1 offenbart ein Brennstoffzellensystem mit einem System zur Regelung der Temperatur des Reformers, so dass die Reformertemperatur unabhängig von dem Lastzustand der Brennstoffzelle in einem vorteilhaften Bereich betrieben werden kann. Hierzu sind Temperatursensoren, Volumenstromsensoren und ein Steuergerät vorgesehen.

Das aus der Brennstoffzelle austretende Anodenabgas enthält noch brennbare Bestandteile, die in einem katalytischen Nachbrenner unter weiterer Zufuhr von Kathodenabgas und/oder Luft nachverbrannt werden. Dies dient der Einhaltung von vorgegebenen Emissionsgrenzwerten sowie der Einhaltung von Sicherheitsrichtlinien, die das Einleiten brennbarer Bestandteile in die Umgebung untersagen. In Hinblick auf die Einhaltung der Emissionsgrenzwerte und vor allem der Sicherheitsrichtlinien ist es erforderlich, die Funktion des in der Regel katalytisch wirkenden Nachbrenners zu überwachen.

Es ist bekannt, dem Nachbrenner einen Gassensor im Abgasstrom nachzuschalten, der die Abgase auf brennbare Bestandteile untersucht. Das Überschreiten eines Grenzwertes ist Hinweis für eine Fehlfunktion des Nachbrenners. Es stehen jedoch keine zuverlässigen, langzeitstabilen und zugleich kostengünstigen Gassensoren bereit. Derzeit erhältliche Gassensoren erfordern ein regelmäßiges Kalibrieren.

Andererseits ist es bekannt, die Funktion des Nachbrenners durch Messung und Vergleich der Temperaturen am Ein- und Ausgang des Nachbrenners zu überwachen. Hierzu sind zwei Temperatursensoren erforderlich, die im Bereich von 500 °C bis 1000 °C jeweils zuverlässig und langzeitstabil die Temperaturen sicherheitsgerichtet erfassen.

Eine ebenfalls erforderliche Überwachung richtet sich auf Übertemperaturen in gefährdeten Bereichen des Nachbrenners. Hier ist es bekannt, stetig wirkende Hochtemperatursensoren im Nachbrenner einzusetzen. Derartige Hochtemperatursensoren sind jedoch nur bedingt langzeitstabil und relativ teuer.

Es ist daher Aufgabe der Erfindung, eine Brennstoffzellenanlage mit einer Brennstoffzelle und einem der Brennstoffzelle nachgeschalteten Nachbrenner bereitzustellen, bei der die Überwachung des Nachbrenners hinsichtlich brennbarer Bestandteile im Abgas durch Untertemperatur sowie hinsichtlich Übertemperatur im Nachbrenner mit zuverlässiger und kostengünstiger Sensorik erfolgt.

Dies wird durch ein Verfahren gemäß den Merkmalen des Anspruchs 1 gelöst. Dieses Verfahren nutzt eine nachfolgend beschriebene Brennstoffzelle, bei der die Überwachung des Nachbrenners indirekt über andere, preisgünstig zu beschaffende und zuverlässig sowie langzeitstabil arbeitende Sensoren erfolgt. Dies sind zumindest je ein Massen- oder Volumenstrommesser für die Brennstoffzuführung zum Reformer, für die erste Sauerstoff, vorzugsweise Luft und / oder Wasserdampf führende Leitung zum Reformer und für die zweite Sauerstoff, vorzugsweise Luft führende Leitung zum Brennstoffzellenstapel (Stack) sowie ein Strom- oder Leistungsmesser für den Stackstrom. Wenn in diesem Zusammenhang von einem Massen- oder Volumenstrommesser die Rede ist, so ist damit jede Art von Sensor gemeint, der in der Lage ist, einen Massen- oder Volumenstrom direkt oder indirekt, beispielsweise über Strömungsgeschwindigkeiten in Rohren oder sich daraus ergebende Druckdifferenzen zu erfassen. Als Strom- oder Leistungsmesser für den Stackstrom kommen Sensoren zum Einsatz, die in der Lage sind, ein von der Strom- oder Leistungsabgabe des Brennstoffzellenstapels abhängiges Messsignal zu erzeugen. Die eingesetzten Messgeräte sind mit einem Überwachungsgerät zur Überwachung des Nachbrenners verbunden, das die Messsignale nach einem erfindungsgemäßen Verfahren miteinander verknüpft und daraus Kennwerte ermittelt, die geeignet sind, den Zustand des Nachbrenners zu charakterisieren. Hierfür kommt beispielsweise eine analoge elektronische Schaltung oder ein Mikroprozessor basiertes System zum Einsatz. Zweck der Überwachung ist es, Übertemperaturen im Nachbrenner zu erkennen und Betriebszustände zu vermeiden, in denen Übertemperaturen im Nachbrenner auftreten können und im Fehlerfall auf die Betriebsparamater der Brennstoffzellenanlage einzuwirken, ein Warnsignal auszugeben und / oder die Brennstoffzellenanlage stillzusetzen.

Optional enthält das Überwachungsgerät ein erstes Überwachungsmodul für die Überwachung des zulässigen Maximaltemperatur des Nachbrenners, die erreicht werden darf, ohne die Materialien des Nachbrenners thermisch zu schädigen. Dieses Überwachungsmodul kann körperlich als separate Einheit in dem Überwachungsgerät integriert sein oder aber als Software-Modul in der Software des Überwachungsgerätes vorliegen. Besondere Eigenschaft der erfindungsgemäßen Brennstoffzellenanlage ist, dass das erste Überwachungmodul dies indirekt ermöglicht, also nicht auf eine Messung der Temperaturdifferenz am Ein- und Ausgang des Nachbrenners oder der Abgaszusammensetzung des Nachbrenners angewiesen sind.

Optional ist in dem Nachbrenner ein Sicherheitstemperaturbegrenzer vorgesehen, der mit dem Überwachungsgerät oder einem zweiten Überwachungsmodul verbunden ist. Dies steht nicht im Widerspruch zu der Aufgabenstellung, teure und nicht langzeitstabile Temperatursensoren am Nachbrenner zu vermeiden. Vielmehr handelt es sich hierbei um kostengünstige Sicherheitstemperaturschalter, die bei einer Temperaturunter- oder -überschreitung einen Schaltzustand ändern, wie sie zum Beispiel zur Überwachung von Herdplatten eingesetzt werden und kostengünstig zur Verfügung stehen. Aufgabe des Sicherheitstemperaturschalters ist es, Temperaturen im Nachbrenner zu erkennen, in denen die Zündfähigkeit der zugeführten Gase nicht sichergestellt ist.

Bevorzugt kommen hier kostengünstige und zuverlässige Sicherheitstemperaturbegrenzer zum Einsatz, bei denen auf Basis einer temperaturbedingten Längen- bzw. Volumenänderung eines Mediums ein Schaltvorgang ausgelöst wird.

Alternativ wird auch das zweite Überwachungsmodul mit einem oder mehreren Messwerten des ersten Überwachungsmoduls versorgt.

Zusätzlich dienen in verschiedenen Varianten ein oder mehrere weitere Messsignale zur Überprüfung, ob der Nachbrenner die erforderliche Mindesttemperatur erreicht hat.

In einer Variante ist dies der Messwert der Spannung des Stackstromes. Diese Variante macht sich die Tatsache zunutze, dass zwischen der Temperatur des Brennstoffzellenstapels und der Spannung ein Zusammengang besteht. Mit Kenntnis des Aufbaus der Brennstoffzellenanlage lässt sich auf die Temperatur des Nachbrenners zurückschließen.

In einer weiteren Variante wird der Messwert der Temperatur des Reformers dem Überwachungsgerät oder -modul zugeführt und verwendet, um indirekt auf die Temperatur des Nachbrenners zu schließen.

In einer dritten Variante wird der Messwert der Temperatur des Abgases des Nachbrenners ermittelt und dem Überwachungsgerät oder -modul zugeführt, um so das Erreichen der Mindesttemperatur zu überwachen.

Auch für die Erfassung der Temperatur kommt bevorzugt ein Sicherheitstemperaturbegrenzer zum Einsatz.

In dem Verfahren zum Überwachen einer oben beschriebenen Brennstoffzellenanlage wird gemäß Anspruch 1 nach dem Messen der Parameter Massenströme oder Volumenströme der Brenngasleitung und der Sauerstoff führenden Leitungen zum Reformer und zum Brennstoffzellenstapel sowie der Messung des Stackstromes in einem Verfahrensschritt zunächst die Sauerstoffzufuhr zum Nachbrenner abgeschätzt. Dies erfolgt auf der Basis eines Prozessmodells, auf das bei einem Ausführungsbeispiel genauer eingegangen wird. Zugleich wird die für eine stöchiometrische Verbrennung erforderliche Sauerstoffmenge anhand der bereits vorliegenden Messwerte und eines Prozessmodells ermittelt. Die Verbrennungstemperatur fällt mit zunehmender Luftzahl. Es wird in einem weiteren Verfahrensschritt die für die Einhaltung der maximalen Temperatur erforderliche minimale Luftzahl bestimmt. Dies kann alternativ auch bereits vorab erfolgt und abgespeichert sein. Unterschreitet die tatsächliche Luftzahl die minimale Luftzahl, besteht das Risiko einer Temperaturüberschreitung, weshalb ein Nachregeln der Sauerstoff- und / oder Brennstoffzufuhr, das Ausgeben eines Warnsignals oder das Abschalten der Brennstoffzellenanlage ausgelöst wird.

In einer Weiterbildung des Verfahrens ist der Nachbrenner mit einer Sicherheitstemperaturbegrenzung verbunden. Sobald die Sicherheitstemperaturbegrenzung eine Temperaturunterschreitung erkennt, wird ein Nachregeln der Sauerstoff- und / oder Brennstoffzufuhr, das Ausgeben eines Warnsignals oder das Abschalten der Brennstoffzellenanlage ausgelöst. Eine Unterschreitung der Temperatur kann zur Folge haben, dass die Zündfähigkeit des Gasgemisches im Nachbrenner nicht gewährleistet ist und somit brennbare Bestandteile in die Umgebung abgegeben werden könnten.

In alternativen Weiterbildungen des Verfahrens wird die Temperatur im Nachbrenner anhand der Ergebnisse der vorhergehenden Verfahrensschritte bestimmt. Da in den vorhergehenden Verfahrensschritten jeweils Grenzwerte betrachtet wurden, handelt es sich bei der aus den Luftverhältnissen ermittelten Temperatur des Nachbrenners um einen Maximalwert. Dieser wird anhand eines oder mehrerer zusätzlich zu messenden Betriebsparameter, wie der Stackstrom-Spannung, der Reformertemperatur oder der Abgastemperatur des Nachbrenners validiert.

Die Erfindung wird nun anhand der Figuren detailliert erläutert.

Es stellen dar:

Figur 1:    Das Strukturbild einer erfindungsgemäßen Brennstoffzellenanlage

Figur 2:    Eine Ausführungsvariante der Brennstoffzellenanlage aus Figur 1

Figur 3:     Eine weitere Ausführungsvariante der Brennstoffzellenanlage aus Figur 1

Figur 4:     Eine weitere Ausführungsvariante der Brennstoffzellenanlage aus Figur 1

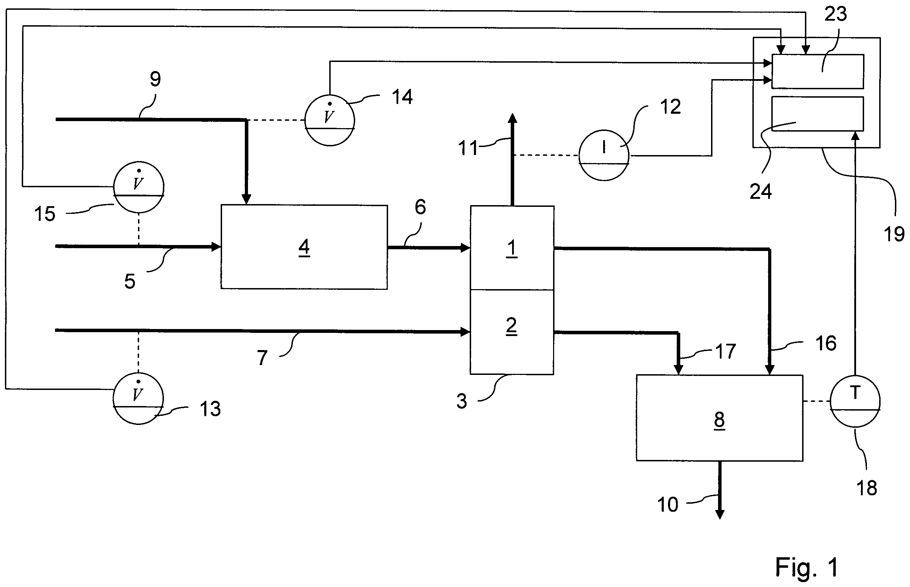

Figur 1 zeigt ein Strukturbild der Brennstoffzellenanlage. Die Brennstoffzellenanlage dient zur Erzeugung elektrischer Energie. Die bei diesem Prozess frei werdende Wärme kann ausgekoppelt werden auf einen externen Wärmeoder Kühlkreislauf, z.B. das Heizungssystem eines Gebäudes übertragen werden.

Die Brennstoffzellenanlage umfasst einem Brennstoffzellenstapel 3 mit vorgeschaltetem Reformer 4 zur Erzeugung eines wasserstoffreichen Prozessgases und nachgeschaltetem Nachbrenner 8 zur Verbrennung unverbrannter Prozessgasbestandteile. In den Reformer 4 führt eine Brennstoffzuführung 5 und eine erste Sauerstoff führende Leitung 9. Bevorzugt ist dies eine Luftzuführung und / oder Wasserdampfleitung. Die über die Brennstoffzuführung 5 zugeführte Menge Brennstoff wird über einen dritten Massen- oder Volumenstrommesser 15 gemessen und die über die erste Sauerstoff führende Leitung 9 zugeführte Luftmenge wird über den ersten Massen- oder Volumenstrommesser 14 gemessen.

Der Reformer 4 kann mittels partieller Oxidation betrieben werden. Bei der Partiellen Oxidation (POX) von Kohlenwasserstoffen wird ein unterstöchiometrisches Brennstoff-LuftGemisch in dem Reformer 4 teilweise oxidiert, wodurch ein wasserstoffreiches Synthesegas, welches in dem Brennstoffzellenstapel 3 weiterverwendet werden kann, entsteht.

Es wird zwischen Thermisch Partieller Oxidation (TPOX) und Katalytisch Partieller Oxidation (CPOX) unterschieden. Bei TPOX laufen diese Reaktionen - abhängig von der Luftzahl - bei mindestens 1200°C ab. Bei CPOX liegt die benötigte Temperatur durch den Einsatz eines katalytischen Mediums bei 800 °C - 900 °C. Welche Technik für die Reformierung eingesetzt werden kann, hängt vom Schwefelanteil des verwendeten Brennstoffes ab. Liegt der Schwefelanteil unter 50 ppm kann CPOX verwendet werden. Ein höherer Schwefelanteil würde den Katalysator zu stark vergiften; deswegen wird für diese Brennstoffe das TPOX-Verfahren eingesetzt oder der Brennstoff wird vor der CPOX mit einem Adsorptionsmittel entschwefelt.

Die partielle Oxidation ist eine exotherme Reaktion:

$$C_nH_m + (n/2) \times O_2 = n \times CO + m/2 \times H_2$$

Die Reaktionstemperatur ist dabei abhängig von der eingestellten Luftzahl, wobei die Luftzahl der Quotient aus tatsächlichem Luftbedarf zu stöchiometrischen Luftbedarf ist. Mit steigender Luftzahl nimmt die Reaktionstemperatur zu, da neben der partiellen Oxidation auch vermehrt die Totaloxidation des Brennstoffes abläuft.

$$C_nH_m + (n + m/4) \times O_2 = n \times CO_2 + m/2 \times H_2O$$

Das im Reformer 4 erzeugte wasserstoffreiche Reformat wird über die Reformatleitung 6 der Anode 1 des Brennstoffzellenstapels 3 zugeführt. Kathodenluft wird über die zweite Sauerstoff führende Leitung 7 der Kathode 2 des Brennstoffzellenstapels 3 zugeführt und mittels des zweiten Massen- oder Volumenstrommesser 13 gemessen.

Bei dem Brennstoffzellenstapel 3 kann es sich um eine Oxidkeramische Brennstoffzelle (SOFC) handeln. Die oxidkeramische Brennstoffzelle ("Solid Oxide Fuel Cell"- SOFC) ist eine Hochtemperaturbrennstoffzelle. Sie arbeitet bei Betriebstemperaturen zwischen 500°C und 1000°C. Die oxidkeramische Brennstoffzelle hat ähnlich wie eine Polymer-Elektrolyt-Brennstoffzelle einen festen Elektrolyten, der hier aber aus yttriumstabilisiertem Zirkonoxid ($ZrO_2/Y_2O_3$) besteht. Bei einer Betriebstemperatur von bis zu 1000°C wird der Kathode 2 des Brennstoffzellenstapels 3 Luft zugeführt. Die hohe Temperatur ist für eine ausreichend hohe Leitfähigkeit des Elektrolyten notwendig. Doppelt negativ geladene Sauerstoff-Ionen ($O_2$-) werden durch den Elektrolyten zur Anode 1 des Brennstoffzellenstapels 3 transportiert. Dort verbinden sie sich mit an der Anode 1 aus dem Brenngas gewonnenen Kohlenmonoxid und Wasserstoff zu Kohlendioxid und Wasserdampf.

Die bei diesem Prozess erzeugte elektrische Energie wird über eine Stackstromabführung 11 abgeführt und mit einer Stackstrom-/Stackleistung-Messeinrichtung 12 gemessen.

Der Nachbrenner 8 ist über die Anodenabgasleitung 16 und die Kathodenabluftleitung 17 mit dem Brennstoffzellenstapel 3 verbunden und setzt mit dem verbleibenden Luftsauerstoff nicht umgesetztes Brenngas aus dem Brennstoffzellenstapel 3 vollständig um und führt diese über die Abgasabführung 10 ab.

$$CO + \tfrac{1}{2}\,O_2 = CO_2 \qquad \text{(Anodenabgas)}$$

$$H_2 + \tfrac{1}{2}\,O_2 = H_2O \qquad \text{(Anodenabgas)}$$

$$C_nH_m + (n + m/4) \times O_2 = n \times CO_2 + m/2 * H_2O \qquad \text{(Restbrennstoff)}$$

Für diese Aufgabe ist der Nachbrenner 8 stets ausreichend mit Luft zu versorgen. Darüber hinaus ist die Luftmenge so zu bemessen, dass eine überstöchiometrische Verbrennung mit einer Temperatur erfolgt, die eine thermische Schädigung der im Nachbrenner 8 ausschließen.

Andererseits ist eine Mindesttemperatur des Nachbrenners 8 sicherzustellen, um die Zündtemperatur der beteiligten Gase sicherzustellen, damit die obige Reaktion erfolgen kann. Die Temperatur des Nachbrenners 8 wird durch einen Sicherheitstemperaturbegrenzer 18 überwacht. Dabei handelt es sich um einen kostengünstigen Temperaturschalter, der bei Über- bzw. Unterschreitung einer bauteilcharakteristischen Temperaturschwelle einen Schaltvorgang auslöst. Das Schaltsignal wird einem Überwachungsgerät 19 beziehungsweise ein darin vorgesehenes zweites Überwachungsmodul 24 zugeführt, das bei Unterschreitung der Mindesttemperatur ein Nachregeln der Sauerstoff- und / oder Brennstoffzufuhr und / oder ein Ausgeben eines Warnsignals und / oder das Abschalten der Brennstoffzellenanlage bewirkt.

Die Messsignale des ersten Massen- oder Volumenstrommessers 14, des zweiten Massen- oder Volumenstrommessers 14, des dritten Massen- oder Volumenstrommessers 15 und der Stackstrom-/Stackleistung-Messeinrichtung 12 werden dem Überwachungsgerät 19 beziehungsweise einem darin vorgesehenen ersten Überwachungsmodul 23 zugeführt. In dem Überwachungsgerät 19 oder ersten Überwachungsmodul 23 ist ein Prozessmodell hinterlegt, auf dessen Basis die maximal zu erwartende Temperatur des Nachbrenners geschätzt wird. Dieses Prozessmodell und die das Prozessmodell nutzenden und von dem Überwachungsgerät 19 oder ersten Überwachungsmodul 23 ausgeführten Verfahrensschritte werden nachfolgend erläutert.

Im Reformer 4 wird aus dem Brennstoff und der Reformerluft, welche dem Reformer 4 unterstöchiometrisch zugeführt wird, in einer volumenvergrößernden Reaktion ein wasserstoffreiches Gas, das Reformat gebildet. Die Bildung der Brenngase Wasserstoff und Kohlenmonoxid im Reformer ist durch die thermodynamische Gleichgewichtslage bestimmt. Diese wiederum hängt von Druck, Temperatur und der Konzentration der Ausgangsstoffe ab. Die Konzentration der Ausgangsstoffe wird direkt über den ersten und dritten Massen- oder Volumenstrommesser 14 und 15 erfasst. Da sich bei gattungsgemäßen Brennstoffzellenanlagen in der Regel um Normaldrucksysteme handelt, kann der Druck als konstant mit 1013mbar angenommen werden. Der Einfluss von Druckschwankungen auf die thermodynamische Gleichgewichtslage im Bereich von 850mbar bis 1200mbar, welche sich beispielsweise durch den Aufstellort ergeben können, ist vernachlässigbar. Daher ist die Qualität des Reformats nur durch die Konzentration der zugeführten Ausgangsstoffe und der charakteristischen Temperatur des Reformers 4 in Brennstoffzellen-Heizgeräten bestimmt. Als zulässige Vereinfachung wird die maximal mögliche charakteristische Reformertemperatur für alle Betriebszustände angenommen. In diesem Fall wird mit den maximal möglichen Mengenströmen an Wasserstoff und Kohlenmonoxid die erforderliche Luftzahl am Nachbrenner 8 abgeschätzt. Da die tatsächlichen oder wahren Mengenströme dieser Brenngase geringer sein werden, weil der Reformer 4 mit einer Temperatur betrieben wird, die unterhalb der maximal zulässigen liegt, wird die erforderliche Luftzahl am Nachbrenner 8 zu hoch und somit zur sicheren Seite hin abgeschätzt.

Der Brennstoffzellenstapel 3 verbraucht einen Teil der Brenngase indem er diese elektrochemisch umsetzt. Der Verbrauch der Brenngase Kohlenmonoxid und Wasserstoff kann über das zweite Faraday'sche Gesetz bestimmt werden. Der dazu erforderliche Gleichstrom des Brennstoffzellenstapels 3 liegt als Messwert der Stackstrom-/Stackleistung-Messeinrichtung 12 vor. Das Faraday'sche Gesetz besagt, dass die durch eine bestimmte Ladungsmenge abgeschiedene Masse verschiedener Stoffe deren molaren Massen eines Äquivalentes entspricht, d.h.

$$Q = z \times n \times F$$

(Faraday'sche Gesetz)

    mit: Q: elektrische Ladung
    z: Zahl der ausgetauschten Elektronen
    n: Stoffmenge
    F: Faraday'sche Konstante

Das Boyle-Mariottesches Gesetz zeigt die Proportionalität des Produktes aus Druck und Volumen zum Produkt aus Stoffmenge und der Temperatur.

$$p \times V = n \times R \times T$$

    mit p: Druck

V: Gas-Volumen
n: Stoffmenge
T: absolute Temperatur
R: allgemeine Gaskonstante

Durch die Kombination des Faraday'schen Gesetzes mit dem Boyle-Mariottesches Gesetz kann der Volumenstrom der Reaktanden in die Brennstoffzelle bei gegebenen Strom I und damit der Brenngasverzehr berechnet werden

$$I = dQ/dt = z \times dn/dt \times F$$

woraus folgt: $dn/dt = I / (z \times F)$

Über die Stöchiometrie lässt sich der Sauerstoffverzehr auf der Kathodenseite berechnen.

$$H_2 + \tfrac{1}{2} O_2 \rightarrow H_2O \qquad \text{(elektrochemische. Oxidation)}$$

$$CO + H_2O \rightarrow CO_2 + H_2O \qquad \text{(Wassergas-Shift-Reaktion)}$$

Die dem Nachbrenner zugeführte Stoffmenge an Brenngas ergibt sich aus der Abschätzung der maximal möglichen Brenngasmenge, die den Reformer verlassen kann, abzüglich der Menge Brenngas, die durch die elektrochemische Reaktion im Brennstoffzellenstapel verzehrt wird.

Aus der Luftmengenmessung 13 ergibt sich die dem Brennstoffzellenstapel 3 zugeführte Sauerstoffmenge. Von diesem Mengenstrom ist der Mengenstrom an Sauerstoff abzuziehen, welcher für die elektrochemische Reaktion im Brennstoffzellenstapel erforderlich ist, welcher sich aus obiger Stöchiometrie ergibt.

In einem weiteren Schritt wird die Sauerstoffmenge, die für eine stöchiometrische Verbrennung der verbliebenen brennbaren Gase im Nachbrenner 8 erforderlich ist, berechnet.

Aus dem Quotienten dieser beiden Sauerstoffmengen wird in einem weiteren Verfahrensschritt die tatsächliche Luftzahl berechnet.

Die adiabate Flammentemperatur des Brenngases bei stöchiometrischer Verbrennung ist aufgrund dessen bekannter Zusammensetzung auch bekannt. Die in Hinblick auf die verwendeten Materialien des Nachbrenners 8 maximal zulässige Nachbrennertemperatur ist ebenfalls bekannt, so dass sich die zur Absenkung der adiabaten Flammentemperatur benötigte Luftzahl aus diesem Zusammenhang ergibt. In einem Verfahrensschritt wird die im vorhergehenden Verfahrensschritt ermittelte tatsächliche Luftzahl mit der minimal benötigten Luftzahl verglichen.

In einem weiteren Verfahrensschritt wird ein Fehlersignal ausgelöst, wenn die tatsächliche Luftzahl kleiner ist als die minimal erforderliche Luftzahl. Dies kann beispielsweise bewirken, dass die Brennstoffzellenanlage abgeschaltet wird. Aus der Signalverarbeitung bekannte Methoden zur Störunterdrückung, beispielsweise Tiefpassfilterung sowie Plausibilitätsprüfungen kommen dabei zum Einsatz.

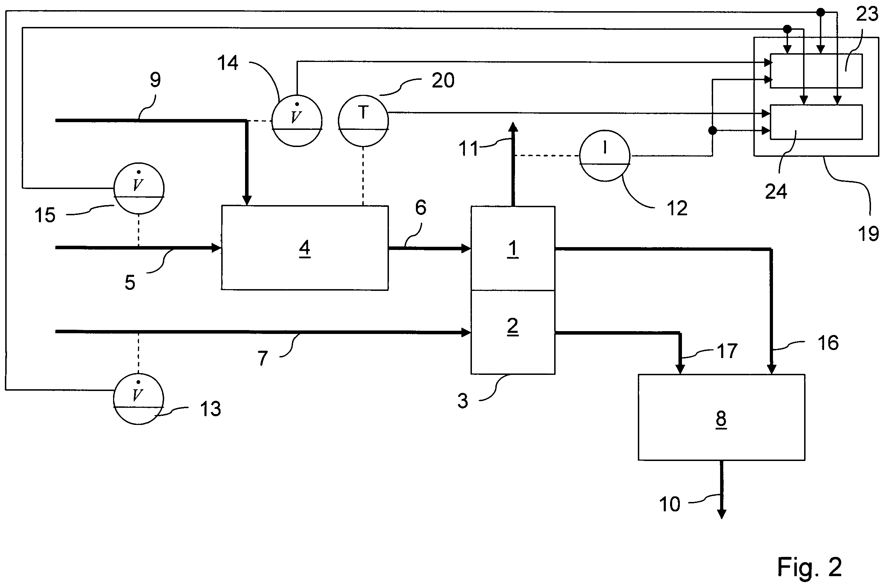

Die Figuren 2 bis 4 stellen alternative Ausführungsformen der Brennstoffzellenanlage aus Figur 1 dar. Nachfolgend werden nur die Unterschiede erläutert.

Anstelle der Sicherheitstemperaturbegrenzung ist in Figur 2 ein Temperatursensor 20 zur Erfassung der Temperatur des Reformers 4 vorgesehen. Dessen Messwert wird direkt dem Überwachungsgerät 19 oder dem ersten Überwachungsmodul 24 zugeführt. Die Messung der Reformertemperatur ermöglicht es, die tatsächliche Temperatur des Nachbrenners 8 genauer anhand des Prozessmodells abzuschätzen, um so auch eine Unterschreitung der Temperatur zu erkennen. Dazu werden dem zweiten Überwachungsmodul 24 zusätzlich die Messwerte des ersten Massen- oder Volumenstrommessers 14, des zweiten Massen- oder Volumenstrommessers 13, des dritten Massen- oder Volumenstrommessers 15 und der Stackstrom-/Stackleistung-Messeinrichtung 12 zugeführt

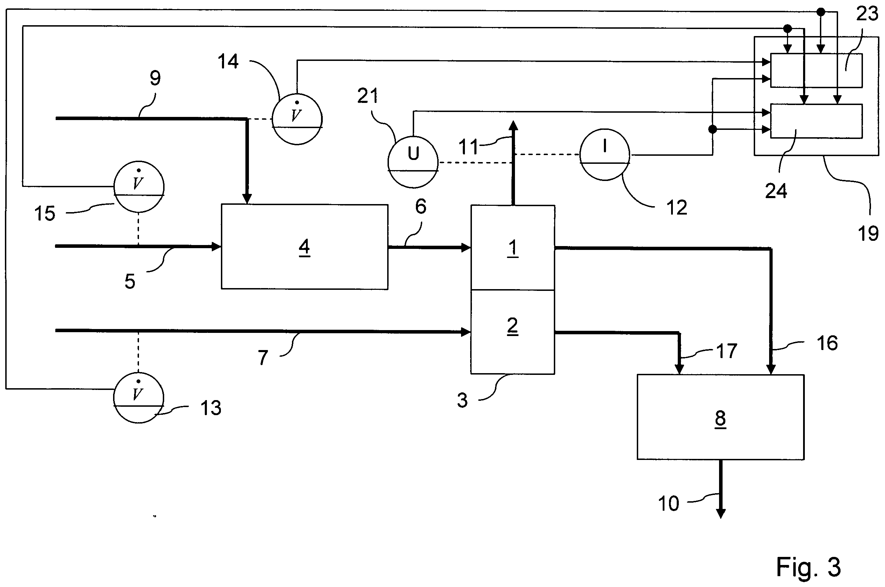

In Figur 3 ist alternativ oder zusätzlich eine Stackspannungs-Messeinrichung 21 vorgesehen, die zusätzlich zu der Stackstrom-/Stackleistungs-Messeinrichtung 12 die an der Stackstromabführung 11 anliegende Spannung ermittelt. Hier wird die Tatsache ausgenutzt, dass ein direkter Zusammenhang zwischen Stackspannung und -temperatur vorliegt.

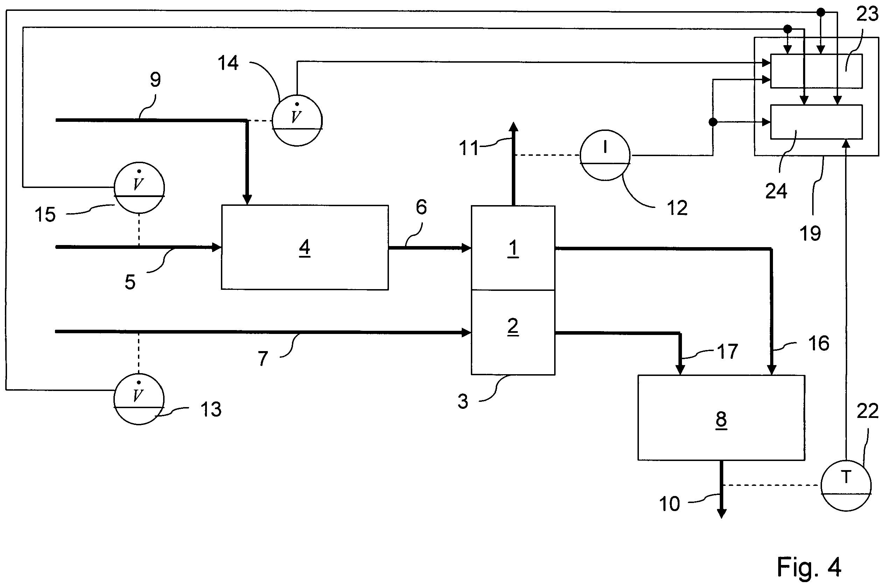

In Figur 4 ist alternativ oder zusätzlich ein Abgastemperatur-Sensor 22 vorgesehen, dessen Messwert direkt dem Überwachungsgerät 19 oder dem ersten Überwachungsmodul 23 zugeführt wird.

Bezugszeichenliste

1    Anode
2    Kathode
3    Brennstoffzellenstapel (Stack)
4    Reformer
5    Brennstoffzuführung
6    Reformatleitung
7    zweite Sauerstoff führende Leitung
8    Nachbrenner
9    erste Sauerstoff führende Leitung
10   Abgasabführung
11   Stackstromabführung
12   Stackstrom-/Stackleistungs-Messeinrichtung
13   zweiter Massen- oder Volumenstrommesser
14   erster Massen- oder Volumenstrommesser
15   dritter Massen- oder Volumenstrommesser
16   Anodenabgasleitung
17   Kathodenabluftleitung
18   Sicherheitstemperaturbegrenzung
19   Überwachungsgerät
20   Temperatursensor
21   Stackspannungs-Messeinrichung
22   Abgastemperatursensor
23   erstes Überwachungsmodul
24   zweites Überwachungsmodul

**Patentansprüche**

1.  Verfahren zum Überwachen einer Brennstoffzellenanlage mit einem Reformer (4) zur Herstellung wasserstoffhaltigen Prozessgases aus einem kohlenwasserstoffhaltigen Brenngas sowie Sauerstoff und / oder Wasserdampf, wobei eine Brenngasleitung (5) sowie mindestens eine erste Sauerstoff führende Leitung, vorzugsweise Luftleitung, und / oder Wasserdampfleitung (9) zu dem Reformer (4) führt, mit mindestens einem Brennstoffzellenstapel (3), wobei der Brennstoffzellenstapel (3) über eine Verbindungsleitung (6) mit dem Reformer (4) verbunden ist, wobei eine zweite Sauerstoff führende Leitung (7), vorzugsweise Luftleitung, zu dem Brennstoffzellenstapel (3) führt, und wobei der Brennstoffzellenstapel (3) über eine Vielzahl von Brennstoffzellen mit Anoden (1), Kathoden (2) und einem Elektrolyten verfügt, mit einer elektrischen Ausgangsleitung (11) des Brennstoffzellenstapels (3) und mit einem katalytischen Nachbrenner (8), der über einen Anodenabgasleitung (16) und eine Kathodenabgasleitung (17) mit dem Brennstoffzellenstapel (3) verbunden ist, **gekennzeichnet durch die Schritte**

    - Messen des Volumen- oder Massenstroms in der ersten Sauerstoff führenden Leitung(9) mittels eines ersten Massen- oder Volumenstrommessers (14),
    - Messen des Volumen- oder Massenstroms in der zweiten Sauerstoff führenden Leitung (7) mittels eines zweiten Massen- oder Volumenstrommessers (13),
    - Messen des Volumen- oder Massenstroms in der Brenngasleitung (5) mittels eines dritten Massen- oder Volumenstrommessers (15),
    - Messen des Stroms oder der Leistung in der elektrischen Ausgangsleitung (11) mittels eines Strom- oder Leistungsmessers (12),
    - Berechnen der Sauerstoffzufuhr am Nachbrenner (8) anhand der Messwerte,
    - Berechnen der für eine stöchiometrische Verbrennung erforderlichen Sauerstoffmenge anhand der Messwerte,
    - Berechnung der Luftzahl als Verhältnis zwischen tatsächlicher und für eine stöchiometrische Verbrennung erforderlichen Sauerstoffmenge,
    - Berechnen einer für die Einhaltung der zulässigen Maximaltemperatur des Nachbrenners minimal zulässigen Luftzahl,
    - Vergleich der tatsächlichen Luftmenge mit der minimal zulässigen Luftzahl,
    - Nachregeln der Sauerstoff- und / oder Brennstoffzufuhr und / oder Ausgeben eines Warnsignals und / oder Abschalten der Brennstoffzellenanlage, wenn die tatsächliche Luftzahl kleiner als die minimal zulässigen Luftzahl ist.

2.  Verfahren zum Überwachen einer Brennstoffzellenanlage nach Anspruch 1,
    **dadurch gekennzeichnet, dass**
    der Nachbrenner (8) mit einer Sicherheitstemperaturbegrenzung (18) verbunden ist und dass das Verfahren den zusätzlichen Schritt

    - Nachregeln der Sauerstoff- und / oder Brennstoffzufuhr und / oder Ausgeben eines Warnsignals und / oder Abschalten der Brennstoffzellenanlage, wenn die Sicherheitstemperaturbegrenzung eine Temperaturunterschreitung erkennt enthält.

3.  Verfahren zum Überwachen einer Brennstoffzellenanlage nach Anspruch 1,
    **dadurch gekennzeichnet, dass**
    die Brennstoffzellenanlage einen weiteren Messaufnehmer aufweist und dass das Verfahren die zusätzlichen Schritte

    - Erfassen des Messwertes des weiteren Messaufnehmers (20, 21, 22),
    - Berechnen der Temperatur des Nachbrenners (8) anhand der Messwerte,
    - Nachregeln der Sauerstoff- und / oder Brennstoffzufuhr und / oder Ausgeben eines Warnsignals und / oder Abschalten der Brennstoffzellenanlage, wenn die Sicherheitstemperaturbegrenzung eine Temperaturunterschreitung erkennt enthält.

4.  Verfahren zum Überwachen einer Brennstoffzellenanlage nach Anspruch 3,
    **dadurch gekennzeichnet, dass**
    der weitere Messaufnehmer ein Temperatursensor (20) zur Erfassung der Temperatur des Reformers (4) ist.

5.  Verfahren zum Überwachen einer Brennstoffzellenanlage nach Anspruch 3,
    **dadurch gekennzeichnet, dass**
    der weitere Messaufnehmer eine Stackspannungs-Messeinrichtung (21) zur Erfassung der Spannung der Stackstromabführung (11) ist.

6.  Verfahren zum Überwachen einer Brennstoffzellenanlage nach Anspruch 3,
    **dadurch gekennzeichnet, dass**
    der weitere Messaufnehmer ein Abgastemperatursensor (22) zur Erfassung der Abgastemperatur des Nachbrenners (8) ist.

**Claims**

1.  Method for monitoring a fuel cell system having a reformer (4) for producing hydrogen-containing process gas from a hydrocarbon-containing combustion gas and oxygen and/or water vapour, wherein a combustion gas line (5) and at least a first line which guides oxygen, preferably an air line, and/or water vapour line (9) lead to the reformer (4), having at least one fuel cell stack (3), wherein the fuel cell stack (3) is connected to the reformer (4) by means of a connection line (6), wherein a second line (7) which guides oxygen, preferably an air line, leads to the fuel cell stack (3), and wherein the fuel cell stack (3) has a large number of fuel cells having anodes (1), cathodes (2) and an electrolyte, having an electrical output line (11) of the fuel cell stack (3) and having a catalytic afterburner (8) which is connected to the fuel cell stack (3) by means of an anode discharge line (16) and a cathode discharge line (17),
    **characterised by the steps of**

    - measuring the volume or mass flow in the first line (9) which guides oxygen by means of a first mass or volume flow measurement device (14),
    - measuring the volume or mass flow in the second line (7) which guides oxygen by means of a second mass or volume flow measurement device (13),
    - measuring the volume or mass flow in the combustion gas line (5) by means of a third mass or volume flow measurement device (15),
    - measuring the current or the power in the electrical output line (11) by means of a current or power measurement device (12),
    - calculating the oxygen supply at the afterburner (8) using the measurement values,
    - calculating the quantity of oxygen required for a stoichiometric combustion using the measurement values,
    - calculating the air ratio as a relationship between the actual quantity of oxygen and the quantity of oxygen required for a stoichiometric combustion,
- calculating a minimum air ratio permissible for compliance with the permissible maximum temperature of the afterburner,
- comparing the actual quantity of air with the minimum permissible air ratio,
- adjusting the supply of oxygen and/or fuel and/or outputting a warning signal and/or switching off the fuel cell system when the actual air ratio is less than the minimum permissible air ratio.

2. Method for monitoring a fuel cell system according to claim 1,
   **characterised in that**
   the afterburner (8) is connected to a safety temperature limitation device (18) and **in that** the method contains the additional step of

   - adjusting the oxygen and/or fuel supply and/or outputting a warning signal and/or switching off the fuel cell system when the safety temperature limitation device identifies that a value has fallen below the temperature value.

3. Method for monitoring a fuel cell system according to claim 1,
   **characterised in that**
   the fuel cell system has an additional measurement sensor and **in that** the method contains the additional steps of

   - detecting the measurement value of the additional measurement sensor (20, 21, 22),
   - calculating the temperature of the afterburner (8) using the measurement values,
   - adjusting the oxygen and/or fuel supply and/or outputting a warning signal and/or switching off a fuel cell system when the safety temperature limitation device identifies that a value has fallen below the temperature value.

4. Method for monitoring a fuel cell system according to claim 3,
   **characterised in that**
   the additional measurement sensor is a temperature sensor (20) for detecting the temperature of the reformer (4).

5. Method for monitoring a fuel cell system according to claim 3,
   **characterised in that**
   the additional measurement sensor is a stack voltage measurement device (21) for detecting the voltage of the stack current discharge (11).

6. Method for monitoring a fuel cell system according to claim 3,
   **characterised in that**
   the additional measurement sensor is an exhaust gas temperature sensor (22) for detecting the exhaust gas temperature of the afterburner (8).

**Revendications**

1. Procédé de surveillance d'un système de cellules à combustible avec un reformeur (4) destiné à la fabrication d'un gaz de processus contenant de l'hydrogène à partir d'un gaz combustible contenant un hydrocarbure ainsi que d'oxygène et/ou de vapeur d'eau, dans lequel une conduite de gaz combustible (5) ainsi qu'au moins une première conduite conduisant de l'oxygène, de préférence une conduite d'air, et/ou une conduite de vapeur d'eau (9) conduisent au reformeur (4), avec au moins une pile de cellules à combustible (3), dans lequel la cellule de piles à combustible (3) est reliée au reformeur (4) par l'intermédiaire d'une conduite de liaison (6), dans lequel une deuxième conduite (7) conduisant de l'oxygène, de préférence une conduite d'air, conduit à la pile de cellules à combustible (3), et dans lequel la pile de cellules à combustible (3) dispose de plusieurs cellules à combustible avec des anodes (1), des cathodes (2) et un électrolyte (3), avec une ligne de sortie électrique (11) de la pile de cellules à combustible (3) et avec un post-brûleur catalytique (8) qui est relié à la pile de cellules à combustible (3) par l'intermédiaire d'une conduite de gaz d'échappement d'anode (16) et d'une conduite de gaz d'échappement de cathode (17),
   **caractérisé par les étapes :**

   - mesure du flux volumique ou massique dans la première conduite (9) conduisant de l'oxygène au moyen d'un premier dispositif de mesure de flux massique ou volumique (14),

- mesure du flux volumique ou massique dans la deuxième conduite (7) conduisant de l'oxygène au moyen d'un deuxième dispositif de mesure de flux massique ou volumique (13),
- mesure du flux volumique ou massique dans la conduite de gaz combustible (5) au moyen d'un troisième dispositif de mesure de flux massique ou volumique (15),
- mesure du courant ou de la puissance dans la ligne de sortie électrique (11) au moyen d'un dispositif de mesure de courant ou de puissance (12),
- calcul de l'amenée d'oxygène au post-brûleur (8) à l'aide des valeurs mesurées,
- calcul de la quantité d'oxygène nécessaire à une combustion stoechiométrique à l'aide des valeurs mesurées,
- calcul du facteur d'air en tant que rapport entre la quantité d'oxygène réelle et la quantité d'oxygène nécessaire à une combustion stoechiométrique,
- calcul d'un facteur d'air minimal admis pour le respect de la température maximale admise du post-brûleur,
- comparaison de la quantité d'air réelle et du facteur d'air minimal admis,
- post-régulation de l'amenée d'oxygène et/ou de combustible et/ou délivrance d'un signal d'avertissement et/ou arrêt du système de cellules à combustible lorsque le facteur d'air réel est inférieur au facteur d'air minimal admis.

2. Procédé de surveillance d'un système de cellules à combustible selon la revendication 1, **caractérisé en ce que** le post-brûleur (8) est relié à une limitation de température de sécurité (18) et **en ce que** le procédé contient l'étape supplémentaire :

- post-régulation de l'amenée d'oxygène et/ou de combustible et/ou délivrance d'un signal d'avertissement et/ou arrêt du système de cellules à combustible lorsque la limitation de température de sécurité détecte une température inférieure à la température voulue.

3. Procédé de surveillance d'un système de cellules à combustible selon la revendication 1, **caractérisé en ce que** le système de cellules à combustible comporte un autre enregistreur de mesure et **en ce que** le procédé contient les étapes supplémentaires :

- détection de la valeur mesurée de l'autre enregistreur de mesure (20, 21, 22),
- calcul de la température du post-brûleur (8) à l'aide des valeurs mesurées,
- post-régulation de l'amenée d'oxygène et/ou de combustible et/ou délivrance d'un signal d'avertissement et/ou arrêt du système de cellules à combustible lorsque la limitation de température de sécurité détecte une température inférieure à la température voulue.

4. Procédé de surveillance d'un système de cellules à combustible selon la revendication 3, **caractérisé en ce que** l'autre enregistreur de mesure est un capteur de température (20) destiné à la détection de la température du reformeur (4).

5. Procédé de surveillance d'un système de cellules à combustible selon la revendication 3, **caractérisé en ce que** l'autre enregistreur de mesure est un dispositif de mesure de tension de pile (21) destiné à la détection de la tension de la sortie de courant de pile (11).

6. Procédé de surveillance d'un système de cellules à combustible selon la revendication 3, **caractérisé en ce que** l'autre enregistreur de mesure est un capteur de température de gaz d'échappement (22) destiné à la détection de la température de gaz d'échappement du post-brûleur (8).

Fig. 1

EP 2 424 021 B1

Fig. 2

EP 2 424 021 B1

Fig. 3

EP 2 424 021 B1

Fig. 4

**IN DER BESCHREIBUNG AUFGEFÜHRTE DOKUMENTE**

**In der Beschreibung aufgeführte Patentdokumente**

- EP 2164124 A1
- US 20060154121 A1